# EUROPEAN PATENT APPLICATION

(11) **EP 3 009 926 A1**
(43) Date of publication of application: **20.04.2016**
(21) Application number: 14811459.8
(22) Date of filing: 24.04.2014
(51) Int. Cl.: G06F 3/06

(54) **DIRECT TABLE STORAGE METHOD AND DEVICE**

(30) Priority: 13.06.2013 CN 201310233497
(71) Applicant: ZTE Corporation, Guangdong Province 518057 (CN)
(72) Inventor: GU, Xia, Shenzhen Guangdong Province 518057 (CN); ZHANG, Qishen, Shenzhen Guangdong Province 518057 (CN)
(74) Representative: Novagraaf Technologies
(86) International application number: PCT/CN2014/076160
(87) International publication number: WO 2014/198161

(57) **Abstract**

Provides are a method and device for storing a direct table. The method includes that: it is determined that an internal table entry storage space of a chip is exhausted; a plurality of table entries of a direct table is stored in an internal statistics storage space of the chip, wherein the direct table can be directly accessed via a storage medium. The present invention solves the problem of degraded forwarding performance caused by modes of storing the table entry in the prior art, and improves the forwarding performance.

## Description

### Technical Field

The present invention relates to the field of communications, and in particular to a method and device for storing a direct table.

### Background

With the increasing demand of operators, equipment manufacturers have to add new functions to the existing equipment. However, a solution about how to add the new functions on the premise of not influencing the forwarding performance of a chip is not presented in the related art.

For a certain chip, a storage size and a processing speed are fixed, that is, a table lookup bandwidth is fixed. A developer always faces such a situation that: under the condition that an internal table entry storage space with a very high table lookup speed is exhausted, and the table lookup performance is close to a bottleneck, a service needs to be added with a small function, and the small function relates to adding a small table; at this point, the developer will place the small table in an external table entry storage space. However, the table lookup performance of the external table entry storage space is much lower than that of the internal table entry storage space, which is bound to cause the forwarding performance to degrade after the service is added with the new function, thereby the use requirement of the service cannot be met.

At present, an efficient solution has not been presented aiming at the problem of degraded forwarding performance caused by modes of storing a table entry in the above related art.

### Summary

The present invention provides a method and device for storing a direct table, for at least solving the problem of degraded forwarding performance caused by modes of storing a table entry in the above related technologies.

According to one aspect of the present invention, a method for storing a direct table is provided, which includes that: it is determined that an internal table entry storage space of a chip is exhausted; a plurality of table entries of a direct table is stored in an internal statistics storage space of the chip, wherein the direct table can be directly accessed via a storage medium.

Preferably, storing the table entries of the direct table in the internal statistics storage space of the chip includes that: it is judged whether a table to be stored is the direct table; if so, the table entries of the direct table are stored in the internal statistics storage space of the chip.

Preferably, storing the table entries of the direct table in the internal statistics storage space of the chip includes that: the direct table is stored in a part of the internal statistics storage space.

Preferably, storing the direct table in the part of the internal statistics storage space includes that: it is judged whether the total number of the table entries of the direct table exceeds the preset number of entries, which are for storing a table whose table type is direct table, in the internal statistics storage space; if so, the table entries of the direct table are stored in the internal statistics storage space of the chip.

Preferably, storing the table entries of the direct table in the internal statistics storage space of the chip further includes that: each of the table entries of the direct table is stored at continuous locations in the internal statistics storage space in sequence.

Preferably, when there are multiple direct tables stored in the internal statistics storage space, storing the table entries of the direct table in the internal statistics storage space of the chip further includes that: the multiple direct tables are stored at the continuous locations in the internal statistics storage space.

According to another aspect of the present invention, a device for storing a direct table is also provided, which includes: a determining component, which is configured to determine that the internal table entry storage space of the chip is exhausted; and a storing component, which is configured to store a plurality of table entries of the direct table in the internal statistics storage space of the chip, wherein the direct table can be directly accessed via a storage medium.

Preferably, the device further includes: a judging component, which is configured to judge whether the table to be stored is the direct table; the storing component is configured to, when a judging result of the judging component is yes, store the table entries of the direct table in the internal statistics storage space of the chip.

Preferably, the device further includes: a querying component, which is configured to read, through the storing component, the direct table from the internal statistics storage space of the chip.

Preferably, the storing component is further configured to, when there are multiple direct tables stored in the internal statistics storage space, store the multiple direct tables at the continuous locations in the internal statistics storage space.

By determining that the internal table entry storage space of the chip is exhausted, and storing the table entries of the direct table which can be directly accessed via the storage medium in the internal statistics storage space of the chip, the present invention solves the problem of degraded forwarding performance caused by modes of storing the table entry in the prior art, and improves the forwarding performance.

### Brief Description of the Drawings

The accompanying drawings described here are used for providing a deeper understanding of the present invention, and constitute a part of the application; schematic embodiments of the present invention and description thereof are used for illustrating the present invention and not intended to form an improper limit to the present invention. In the accompanying drawings:
Fig. 1 is a flowchart of a method for storing a direct table according to an embodiment of the present invention;
Fig. 2 is a structural diagram of a device for storing a direct table according to an embodiment of the present invention;
Fig. 3 is a preferred structural diagram I of a device for storing a direct table according to an embodiment of the present invention;
Fig. 4 is a preferred structural diagram II of a device for storing a direct table according to an embodiment of the present invention; and
Fig. 5 is a flowchart of a method for storing a direct table according to a preferred embodiment of the present invention.

### Detailed Description of the Embodiments

The present invention is elaborated below with reference to the accompanying drawings and in combination with embodiments. Note that, embodiments and features in embodiments in the application can be combined with each other on condition of not conflicting.

Note that, these steps presented in the flowchart of the accompanying drawings can be executed in a computer system like a group of machine-executable instructions; besides, although a logical sequence is shown in the flowchart, in some cases, the presented or described steps can be executed in an order different from that described here.

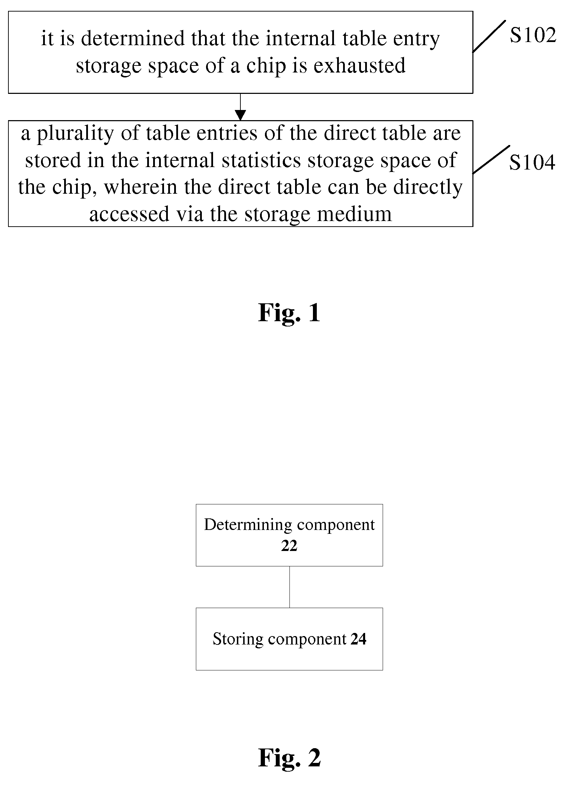

One embodiment provides a method for storing a direct table. Fig. 1 is a flowchart of a method for storing a direct table according to an embodiment of the present invention. As shown in Fig. 1, the method includes the following steps:
Step 102: it is determined that the internal table entry storage space of a chip is exhausted; and
Step 104: a plurality of table entries of the direct table are stored in the internal statistics storage space of the chip, wherein the direct table can be directly accessed via the storage medium.

Through the above steps, in a situation that the internal table entry storage space is exhausted, the direct table is stored in the internal statistics storage space which is used for statistics; because a table lookup speed of the internal statistics storage space is higher than that of an external table entry storage space, the problem of degraded forwarding performance caused by storing the direct table in the external table entry storage space after the internal table entry storage space is exhausted is solved, and the forwarding performance is improved.

The direct table includes a table whose storage location can be directly accessed through a key value in its table entry.

Preferably, storing the table entries of the direct table in the internal statistics storage space of the chip includes that: it is judged whether the table to be stored is the direct table; if so, the table entries of the direct table are stored in the internal statistics storage space of the chip. In this way, the direct table which directly influences the table lookup speed and the forwarding performance is stored in the internal statistics storage space, and the table which has a little influence on the table lookup speed and the forwarding performance, e.g. a Hash table, is stored in the external table entry storage space, so as to save the internal statistics storage space.

Preferably, the internal statistics storage space is used for a statistical function of the chip, so it is feasible to store the direct table by using only a part of the internal statistics storage space, and the other part is reserved to implement the statistical function.

The size of the internal statistics storage space is fixed, so a part is reserved to implement the statistical function, the size of the other part is limited; for the direct table exceeding its processing capacity, the processing capacity of the internal statistics storage space is limited. In a preferred embodiment, first it is judged whether the total number of the table entries of the direct table exceeds the preset number of entries for storing the table entries whose table type is direct table in the internal statistics storage space; if so, the table entries of the direct table is stored in the internal statistics storage space of the chip. In this way, it can be ensured that each direct table which is stored in the internal statistics storage space can be processed well.

Preferably, storing the table entries of the direct table in the internal statistics storage space of the chip further includes that: the table entries of the direct table are stored at the continuous locations in the internal statistics storage space in sequence. For example, the table entries from 1 to 300 of the direct table 1 are stored in the entries from 501 to 800 of the internal statistics storage space, and the location where each table entry of the direct table 1 is stored in the corresponding entry of the internal statistics storage space is the location of bytes from 0 to 15, wherein the size of the table entry (namely a result of the direct table) of the direct table 1 is 16 bytes. The efficiency of table lookup is improved by storing the table entry in this way.

Preferably, when it is needed to store multiple direct tables in the internal statistics storage space, the multiple direct tables can be stored at the continuous locations in the internal statistics storage space. For example, in the above example, if it is also needed to store a direct table 2 whose number of the table entries is 200, then the table entries from 1 to 200 of the direct table 2 are stored in the entries from 501 to 700 of the internal statistics storage space, and the location where each table entry of the direct table 2 is stored is the location of bytes from 16 to 23 of the corresponding entry of the internal statistics storage space, wherein the size of the table entry of the direct table 2 is 8 bytes. In this way, the storage space of the internal statistics storage space is saved and the efficiency of table lookup is improved.

One embodiment also provides a device for storing a direct table, which is configured to implement the method for storing the direct table. The corresponding functions involved in the device have been elaborated in the method, so they will not be repeated here.

Fig. 2 is a structural diagram of a device for storing a direct table according to an embodiment of the present invention. As shown in Fig. 2, the device includes: the determining component 22 and the storing component 24; wherein the determining component 22 is configured to determine that the internal table entry storage space of the chip is exhausted; the storing component 24 is coupled to the determining component 22 and configured to store a plurality of table entries of the direct table in the internal statistics storage space of the chip, wherein the direct table can be directly accessed via the storage medium.

Through the above device, the determining component 22 determines that the internal table entry storage space of the chip is exhausted, and the storing component 24 stores the table entries of the direct table in the internal statistics storage space of the chip, wherein the direct table can be directly accessed via the storage medium. Because the table lookup speed of the internal statistics storage space is higher than that of the external table entry storage space, the problem of degraded forwarding performance caused by storing the direct table in the external table entry storage space after the internal table entry storage space is exhausted is solved, and the forwarding performance is improved.

The components and elements involved in this embodiment can be implemented by either software or hardware. The components and elements described in this embodiment can also be set in a processor; for example, it can be described as that: a processor includes the determining component 22 and the storing component 24. Wherein names of these components do not form a limit to the components in some cases, for example, the determining component 22 can also be described as "a component which is configured to determine that the internal table entry storage space of the chip is exhausted".

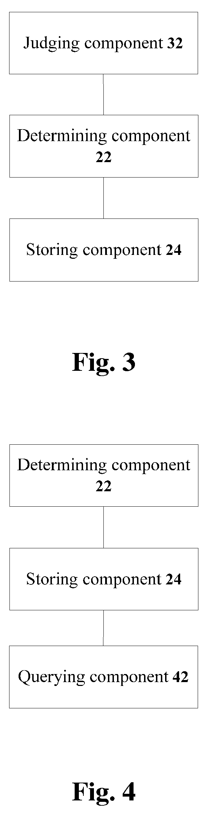

Fig. 3 is a preferred structural diagram I of a device for storing a direct table according to an embodiment of the present invention. As shown in Fig. 3, the device can also include: the judging component 32, which is configured to judge whether the table to be stored is the direct table; the storing component 24, which is configured to, when the judging result of the judging component 32 is yes, store the table entries of the direct table in the internal statistics storage space of the chip.

Fig. 4 is a preferred structural diagram II of a device for storing a direct table according to an embodiment of the present invention. As shown in Fig. 4, the device can also include: the querying component 42, which is coupled to the storing component 24 and configured to read, through the storing component 24, the direct table from the internal statistics storage space of the chip.

Preferably, the storing component 24 is further configured to, when there are multiple direct tables stored in the internal statistics storage space, store the multiple direct tables at the continuous locations in the internal statistics storage space. For example, in a situation that a result size of each entry of the direct table is M bytes, the result of the direct table is added to the byte location [P, P+M] of each entry in N entries of the internal statistics storage space, wherein P is a nonnegative integer, and P+M is not greater than the maximum size which is provided for storing the entries of the direct table by the internal statistics storage space.

The implementation process of the above embodiment is elaborated below in combination with the preferred embodiments and the accompanying drawings.

The preferred embodiment utilizes an internal statistics memory (namely the internal statistics storage space) of the chip to look up the table; this function does not occupy a table storage memory of the chip, at the same time, the table lookup only occupies a few table lookup bandwidths, thus a new function is added optimally.

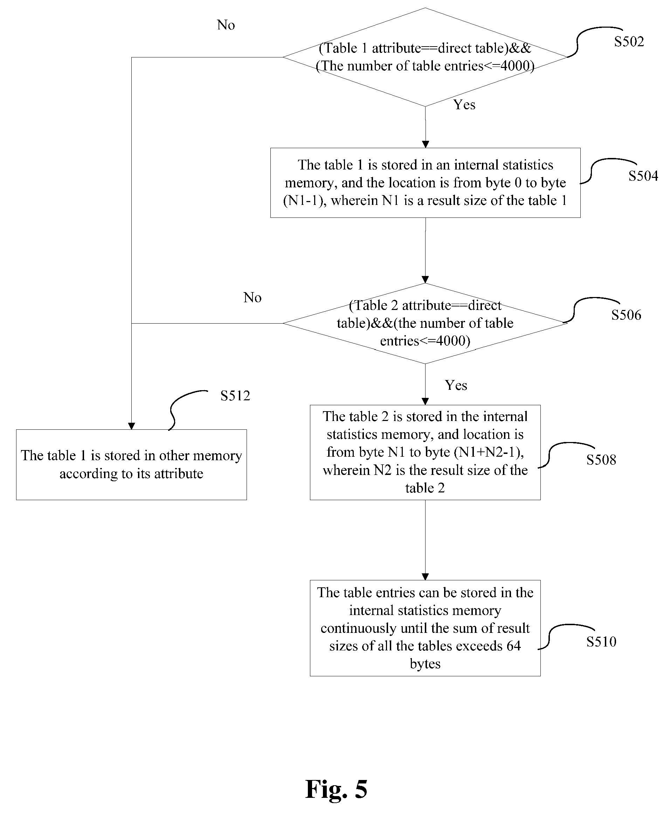

Fig. 5 is a flowchart of a method for storing a direct table according to a preferred embodiment of the present invention. As shown in Fig. 5, the flow includes the following steps:
Step 502: it is judged whether the table 1 is a direct table and whether the total number of table entries of the table 1 is less than 4000; if so, Step 504 is executed; if not, Step 512 is executed; note that, the above total number of entries 4000 is only the maximum number of entries which is provided for storing the number of table entries of the direct table by the internal statistics memory; in an actual design, the total number of entries can be set;
Step 504: the direct table 1 is stored in a certain area of the internal statistics memory, and occupies the bytes from 0 to (N1-1) of each entry, namely from byte 0 to byte N1-1, wherein N1 is the result size of the table 1, and it is an integer; Step 506 is executed;
Step 506: it is judged whether the table 2 is s direct table and whether the total number of table entries of the table 2 is less than 4000; if so, Step 508 is executed; or else, Step 512 is executed;
Step 508: the direct table 2 is stored in the internal statistics memory; it shares the entries with the table 1, and occupies the bytes from N1 to (N1+N2-1) of each entry, wherein N2 is the result size of the table 2; Step 510 is executed;
Step 510: by analogy, the other tables which can be stored are stored; when the sum of result sizes of all the tables which are stored in the internal statistics memory is more than 64 bytes, it is considered that the memory is full, and the entries cannot be shared any more;
   that is, if N1+N2+N3+...+Nn > 64 bytes (B), then the table N cannot be stored in the internal statistics memory; if N1+N2+N3+...+Nn ≦ 64B, then there is no problem, the table N can be placed in the internal statistics memory;
Step 512: the table entries are placed in an external memory (namely the external table entry storage space).

This way is applied to all switching equipment using the chip of EZchip (which is a company providing fast network processor chips).

Using the above method improves the table lookup performance of the chip and optimizes the performance of the switching equipment.

The implementation process of the above embodiment is elaborated below in combination with another preferred embodiment.

Table I shows information of the tables to be stored according to the preferred embodiments of the present invention as follows:

| Table number | 1 | 2 | 3 | 4 | 5 | 6 |
|---|---|---|---|---|---|---|
| Table type | Direct table | Direct table | Direct table | Direct table | Direct table | Direct table |
| Number of table entries | 4000 | 8000 | 8000 | 4000 | 1000 | 1000 |
| Result size | 16 | 32 | 32 | 8 | 16 | 32 |

Aiming at the tables in Table I:
table 1: first it is determined as the direct table, and the number of table entries is not more than 4000, then it can be stored in the internal statistics memory; after that, the table entries of the table 1 are stored in the entries from 1000 to 4999 in the internal statistics memory, at the same time, each the table entries is placed at the bytes from 0 to 15 of the each entry.
table 2: first the table 2 is determined as the Hash table instead of the direct table, and it is directly placed in other memory, e.g. the external table entry storage space;
table 3: although the table 3 is the direct table, the number of table entries of the table 3 is more than 4000, and it can only be placed in other memory;
table 4: first the table 4 is determined as the direct table, and the number of table entries of the table 4 is not more than 4000, then it can be placed in the internal statistics memory; after that, the table entries of table 4 are stored in the entries from 1000 to 4999 in the internal statistics memory, at the same time, each table entry is placed at the bytes from 16 to 23 of each entry;
table 5: first the table 5 is determined as the direct table, and the number of table entries of the table 5 is not more than 4000, then the table entries of the table 5 can be placed in the internal statistics memory; after that, the table entries of the table 5 are stored in the entries from 1000 to 4999 in the internal statistics memory, at the same time, each table entry is stored at the bytes from 24 to 39 of each entry;
table 6: first the table 6 is determined as the direct table, and the number of table entries of the table 6 is not more than 4000, then it can be stored in the internal statistics memory; the table entries of the table 6 are to be stored in the entries from 1000 to 4999 in the internal statistics memory, at the same time, each table entry is to be placed at the bytes from 40 to 71 of each entry; then it is found that the number of bytes placed finally is already 71, which far exceeds 63, so the table 5 cannot be stored in the entries from 1000 to 4999, but can be stored in other entries (namely the other entries except entries from 1000 to 4999) of the internal statistics memory. However, the maximum number of the entries of the internal statistics memory is 8000 in this preferred embodiment, and some of them are reserved for statistics (4000 entries are reserved in this preferred embodiment), so the Table 5 cannot be placed in the internal statistics memory, but can only be placed in other memory.

A new method for arranging the table entry with a small capacity is provided in the above embodiments and preferred embodiments, thereby a small new function can be added successfully on condition of ensuring the processing performance of the chip. At the same time, through the idea of placing the direct table entry with a small capacity in the internal statistics memory, the bottleneck of table lookup performance is solved, and the forwarding performance is improved.

Obviously, the skilled personnel in the field should appreciate that the above components and steps of the present invention can be implemented by a general-purpose computing device, and they can be centralized in a single computing device or distributed on a network composed of multiple computing devices; optionally, they can be implemented by a program code which is capable of being executed by the computing device, so that they can be stored in a storage device and executed by the computing device, or they are made into integrated circuit components, respectively, or multiple components and steps of them are made into a single integrated circuit component to implement. In this way, the present invention is not limited to any particular combination of hardware and software.

The above is only the preferred embodiment of the present invention and not intended to limit the present invention; for the skilled personnel in the field, the present invention may have various modifications and changes. Any modifications, equivalent replacements, improvements and the like within the spirit and principle of the present invention shall fall within the scope of the claims of the present invention.

## Claims

1. A method for storing a direct table, **characterized by** comprising:
determining that an internal table entry storage space of a chip is exhausted; and
storing a plurality of table entries of the direct table in an internal statistics storage space of the chip, wherein the direct table can be directly accessed via a storage medium.

2. The method according to claim 1, **characterized in that** storing the table entries of the direct table in the internal statistics storage space of the chip comprises:
judging whether a table to be stored is a direct table;
if the table to be stored is the direct table, storing the table entries of the direct table in the internal statistics storage space of the chip.

3. The method according to claim 2, **characterized in that** storing the table entries of the direct table in the internal statistics storage space of the chip comprises:
storing the direct table in a part of the internal statistics storage space.

4. The method according to claim 3, **characterized in that** storing the direct table in the part of the internal statistics storage space comprises:
judging whether the total number of the table entries of the direct table exceeds the preset number of entries, which are for storing a table whose table type is a direct table, in the internal statistics storage space;
based on that the total number of the table entries of the direct table exceeds the number of entries, which are for storing the table whose table type is the direct table, in the internal statistics storage space, storing the table entries of the direct table in the internal statistics storage space of the chip.

5. The method according to any one of claims 1 to 4, **characterized in that** storing the table entries of the direct table in the internal statistics storage space of the chip further comprises:
storing each of the table entries of the direct table at continuous locations in the internal statistics storage space in sequence.

6. The method according to any one of claims 1 to 4, **characterized in that** when there are multiple direct tables stored in the internal statistics storage space, storing the table entries of the direct table in the internal statistics storage space of the chip further comprises:
storing the multiple direct tables at the continuous locations in the internal statistics storage space.

7. A device for storing a direct table, **characterized by** comprising:
a determining component configured to determine that an internal table entry storage space of a chip is exhausted; and
a storing component configured to store a plurality of table entries of the direct table in an internal statistics storage space of the chip, wherein the direct table can be directly accessed via a storage medium.

8. The device according to claim 7, **characterized by** further comprising:
a judging component configured to judge whether a table to be stored is the direct table;
the storing component configured to, when the table to be stored is the direct table, store the table entries of the direct table in the internal statistics storage space of the chip.

9. The device according to claim 7 or 8, **characterized by** further comprising:
a querying component configured to read, through the storing component, the direct table from the internal statistics storage space of the chip.

10. The device according to claim 7 or 8, **characterized in that** the storing component is further configured to, when there are multiple direct tables stored in the internal statistics storage space, store the multiple direct tables at the continuous locations in the internal statistics storage space.
